# EUROPÄISCHE PATENTANMELDUNG

(11) **EP 1 271 878 A1**
(43) Veröffentlichungstag der Anmeldung: **02.01.2003**
(21) Anmeldenummer: 01440141.8
(22) Anmeldetag: 22.05.2001
(51) Int. Cl.: H04L 29/06, H04L 12/26

(54) **Verfahren für ein verteiltes System zur Erbringung mindestens eines Dienstes sowie Client, Client-Dienst-Managementmodul und Datenbasis hierfür**

(71) Anmelder: ALCATEL, 75008 Paris (FR)
(72) Erfinder: Suckow, Ralf, 10318 Berlin (DE)
(74) Vertreter: Rausch, Gabriele, Dr.

(57) **Zusammenfassung**

Die vorliegende Erfindung betrifft ein Verfahren für ein verteiltes System zur Erbringung mindestens eines Dienstes, der jeweils von einem ersten oder mindestens einem zweiten Server (P1-P3;A1,A2) für einen ersten oder mindestens einen zweiten Client (C1-C3;C4,C5;CA1-CA3) erbracht werden kann. Die Erfindung betrifft ferner einen Client hierfür, einen Client-Dienst-Managementmodul hierfür sowie eine Datenbasis (DB1;DB2;DB3) hierfür.

Bei dem Verfahren wird beim Erbringen des Dienstes durch den ersten oder den zweiten Server (P1-P3;A1,A2) für einen der Clients der Client-Gruppe (G1;G2;G3) mindestens ein Qualitätsmerkmal (Q11-Q16) ermittelt, das mindestens eine Qualität des Erbringens des Dienstes durch den jeweiligen ersten bzw. den zweiten Server kennzeichnet. Das Qualitätsmerkmal wird in eine der Client-Gruppe zugeordnete clientseitige Datenbasis (DB1;DB2;DB3) eingetragen. Bei einer Anforderung des Dienstes für einen der Clients der Client-gruppe wird der erste oder der zweite Server anhand des in der clientseitigen Datenbasis eingetragenen Qualitätsmerkmals ausgewählt.

## Beschreibung

Die vorliegende Erfindung betrifft ein Verfahren für ein verteiltes System zur Erbri n-gung mindestens eines Dienstes, der jeweils von einem ersten Server oder mindestens einem zweiten Server für einen ersten Client oder mindestens einen zweiten Client erbracht werden kann. Die Erfindung betrifft ferner einen Client hierfür, einen Client-Dienst-Managementmodul hierfür sowie eine Datenbasis hierfür.

Bei verteilten Systemen, beispielsweise Netzwerk-Management-Systemen oder Systemen zur Bereitstellung von Videodaten, ist es bekannt, dass ein Dienst alternativ von mehreren Servern für mehrere Clients bereit gestellt wird. Ein solcher Dienst ist beispielsweise bei einem Netzwerk-Management-System die Behandlung von Alarmmeldungen, die von Netzknoten des durch das Netzwerkmanagementsystem gemanagten Telekommunikationsnetzes zunächst an Clients gesendet werden, die dann Bearbeitungsdienste für die Alarmmeldungen bei Servern anfordern. Bei den Clients handelt es sich beispielsweise um Client-Rechner, die von Server-Rechnern entfernt sind und beispielsweise über Telekommunikationsnetze miteinander verbunden sind oder um Client-Applikationen, die gemeinsam auf einem Rechner ausgeführt werden und die Dienste von Server-Applikationen anfordern, die von einem oder mehreren separaten Rechnern ausgeführt werden.

Ein Szenario kann beispielsweise so aussehen, dass Client-Rechner, beispielsweise Personal-Computer, bei sogenannten Streamed-Video-Proxy-Servern Videodaten anfordern, die diese dann an die Client-Rechner übertragen. Ein Proxy-Server kann mehrere Client-Rechner bedienen. Umgekehrt kann ein Client-Rechner die Videodaten nicht nur bei einem Proxy-Server, sondern alternativ auch bei einem anderen Proxy-Server anfordern. Mehrere alternative Server, im konkreten Fall mehrere Proxy-Server, können beispielsweise aus Gründen einer optimalen Lastverteilung und/oder aus Redundanzgründen vorgesehen sein.

Ein Client-Rechner, der von einem Server einen Dienst benötigt, beispielsweise ein Client-Rechner, der Videodaten von einem Proxy-Server benötigt, muss diesen Dienst möglicherweise bei mehreren Servern anfordern, bis er einen solchen Server findet, der den gewünschten Dienst in der erforderlichen Dienst-Qualität bereitstellen kann. Dabei hängt die Dienst-Qualität nicht nur von der Qualität des Servers bzw. dessen Lastsituation ab, sondern auch von der jeweiligen Verbindungsqualität der jeweiligen Verbindungen zwischen den Servern und dem Client-Rechner.

Selbst wenn man mehrere Server zu einem lokalen Servernetz zusammenschalten würde und diesen einen Lastverteiler voranschalten würde, der eine von einem Client-Rechner gesendete Anforderung für einen Dienst an einen solchen Server des Servernetzes weiterleitete, der zur Erbringung des Dienstes in hinreichender Dienst-Qualität in der Lage ist, bleibt noch immer die Problematik, dass die Verbindung zwischen dem ausgewählten Dienst-Server und dem Client-Rechner überlastet oder gestört sein kann, so dass letztlich der Dienst, beispielsweise das Senden von Videodaten, nicht in der erforderlichen Dienst-Qualität erbracht werden kann. Zudem ist diese Lösung nur dann praktikabel, wenn die Server verhältnismäßig nahe beieinander sind, beispielsweise über ein lokales Netzwerk miteinander verbunden sind.

Dieselben Probleme ergeben sich im Grunde genommen auch dann, wenn es sich bei den Clients um Client-Applikationen handelt, die von einem ersten Rechner ausgeführt werden, und bei den Servern um Server-Applikationen, die auf einem oder mehreren weiteren Rechnern ausgeführt werden, die mit dem ersten Rechner beispielsweise über ein lokales Netzwerk verbunden sind.

Es ist daher Aufgabe der Erfindung, bei einem verteilten System die Qualität der Diensterbringung zu verbessern.

Diese Aufgabe wird gelöst durch ein Verfahren gemäß der technischen Lehre des Anspruches 1, einen Client gemäß der technischen Lehre des Anspruches 10 und ein Client-Dienst-Managementmodul gemäß der technischen Lehre des Anspruches 12. Ferner ist zur Lösung der Aufgabe eine Datenbasis gemäß der technischen Lehre des Anspruches 14 vorgesehen.

Ein Grundgedanke der Erfindung liegt darin, mehrere Clients, die jeweils Dienste bei alternativen Servern anfordern können, zu einer Client-Gruppe zusammen zu schließen. Die Clients berichten sich sozusagen gegenseitig, welche Erfahrungen sie mit der Diensterbringung durch die unterschiedlichen Server gemacht haben. Die Clients ermitteln jeweils mindestens ein Qualitätsmerkmal bezüglich der Diensterbringung durch einen Server. Das Qualitätsmerkmal wird in Bezug auf den jeweiligen Server in eine clientseitige Datenbasis eingetragen. Bei dem Qualitätsmerkmal kann es sich beispielsweise um die jeweilige Verfügbarkeit der Server handeln. Bei einer nachfolgenden Anforderung des Dienstes durch einen der Clients der Client-Gruppe wird dann anhand der clientseitigen Datenbasis ein geeigneter Server zur Erbringung des Dienstes ausgewählt. Die Auswahl des geeigneten Servers erfolgt sozusagen auf der Grundlage der seither durch die Clients der Client-Gruppe gemachten Erfahrungen mit den Servern.

Bedingt durch die Anordnung der Datenbasis bei den Clients entsteht nur ein sehr geringer Kommunikationsaufwand bei der Pflege der Datenbasis. Zudem lässt sich eine solche Datenbasis verhältnismäßig einfach realisieren. Bei der Bewertung der Qualität des jeweils durch einen Server erbrachten Dienstes wird auch die Qualität der jeweiligen Verbindung zwischen Server und Client berücksichtigt. Die Clients der Client-Gruppe sind relativ nahe beieinander angeordnet, während die Server verhältnismäßig weit von der Client-Gruppe entfernt sind. Die Begriffe "nah" und "fern" sind hierbei als räumlich nah und fern und/oder als schnelle bzw. langsame Kommunikation und/oder als Kommunikation zu geringen bzw. hohen Kosten und/oder als Kommunikation über eine zuverlässige Verbindung bzw. eine unzuverlässige Verbindung zu verstehen. Jedenfalls fällt es bezüglich der jeweiligen Dienst-Qualität kaum ins Gewicht, ob ein Server einen Dienst für einen ersten Client der Client-Gruppe oder zweiten Client der Client-Gruppe erbringt.

Vorteilhafte Ausgestaltungen der Erfindung ergeben sich aus den abhängigen Ansprüchen sowie aus der nachfolgenden Beschreibung.

Zweckmäßigerweise ist vorgesehen, dass die Clients selbst das mindestens eine Qualitätsmerkmal für die Qualität des Erbringens des Dienstes ermitteln. Prinzipiell ist es aber auch denkbar, dass ein separates Modul hierfür vorgesehen ist. Beispielsweise könnte ein Router, über den die Clients der Client-Gruppe mit einem Server verbunden sind, die Qualität der Diensterbringung bewerten. Beispielsweise könnte ein Router ermitteln, ob Videodaten in der erforderlichen Kontinuität übermittelt werden. An dieser Stelle sei auch bemerkt, dass es zwar vorteilhaft ist, wenn jeder Client der Client-Gruppe beim Erbringen eines Dienstes durch einen Server die jeweilige Qualität bewertet und in die clientseitige Datenbasis einträgt. Es ist jedoch auch möglich, dass nur ein Teil der Clients eine solche Bewertung vornimmt, während andere Clients der Client-Gruppe von diesen Erfahrungen bei der Auswahl eines Servers für eine Diensterbringung zwar profitieren, selbst jedoch keine Qualitätsbewertung vornehmen und die dabei ermittelten Ergebnisse in die Datenbasis eintragen.

Zweckmäßigerweise ist vorgesehen, dass die Clients selbst bei der Anforderung eines Dienstes die in der Datenbasis eingetragenen Daten auswerten. Es ist aber auch denkbar, dass zur Auswahl eines geeigneten Servers ein Client-Dienst-Managementmodul vorgesehen ist, beispielsweise ein Programm-Modul, das eine von einem Client der Client-Gruppe gesendete Anforderung für einen Dienst an einen geeigneten Server weiterleitet, den das Client-Dienst-Managementmodul anhand der in der Datenbasis eingetragenen Qualitätsmerkmale ermittelt.

Das Client-Dienst-Managementmodul trägt zweckmäßigerweise die Qualitätsmerkmale bezüglich der Server in die Datenbasis ein. Das Client-Dienst-Managementmodul kann von einem der Clients der Client-Gruppe ausgeführt werden oder beispielsweise auch in einer Schnittstelleneinrichtung, z.B. einem Router, der Client-Gruppe enthalten sein.

Wenn die Qualitätsmerkmale, die für unterschiedliche Server in Bezug auf deren jeweilige Diensterbringung in der Datenbasis eingetragen sind, im wesentlichen übereinstimmen, d.h. wenn die Server den jeweiligen Dienst im Grunde genommen mit der gleichen Qualität erbringen können, ist zweckmäßigerweise vorgesehen, dass ein geeigneter Server anhand einer Zufallsauswahl und/oder nach einem vorbestimmten Lastverteilungskriterium ausgewählt wird. Ansonsten würden möglicherweise mehrere Clients ihre Dienstanforderungen an denselben Server richten, was bei diesem zu einer Überlastsituation führen könnte. Die Lastverteilung kann stochastisch erfolgen, beispielsweise durch eine Zufallsauswahl, und/oder z.B. nach einem Umlaufprinzip, bei dem Dienstanforderungen umlaufend an alle Server gerichtet werden, die in der Datenbasis hinsichtlich ihrer Qualität im wesentlichen gleich bewertet sind. Im Englischen wird ein solches Verfahren auch als "round-robin" bezeichnet.

Bei der Realisierung des erfinderischen Konzeptes ergeben sich zahlreiche Möglichkeiten: beispielsweise können die Clients Client-Rechner und die Server Server-Rechner sein, die über eines oder mehrere Telekommunikationsnetze, beispielsweise Wide Area Networks (WAN) mit den Clients verbunden sind. Diese ihrerseits sind beispielsweise über ein Local Area Network (LAN) miteinander verbunden. Bei einer weiteren Ausführungsform der Erfindung sind die Clients Client-Applikationen, also Client-Programme, die von einem Rechner ausgeführt werden. Für die Client-Applikationen werden Dienste durch unterschiedliche Server bereitgestellt, bei denen es sich um Server-Rechner oder Server-Applikationen handeln kann, die beispielsweise über ein lokales Netzwerk mit den die Client-Applikationen ausführenden Rechner verbunden sind.

Nachfolgend werden einige Ausführungsbeispiele der Erfindung anhand der Zeichnung näher erläutert. Es zeigen:
- Figur 1: eine Anordnung zu Ausführung des erfindungsgemäßen Verfahrens mit Client-Gruppen G1, G2 ; G3, deren erfindungsgemäße Clients C1-C3; C4, C5 bzw. CA1-CA3 durch Server P1 - P3 mit Diensten versorgt werden,

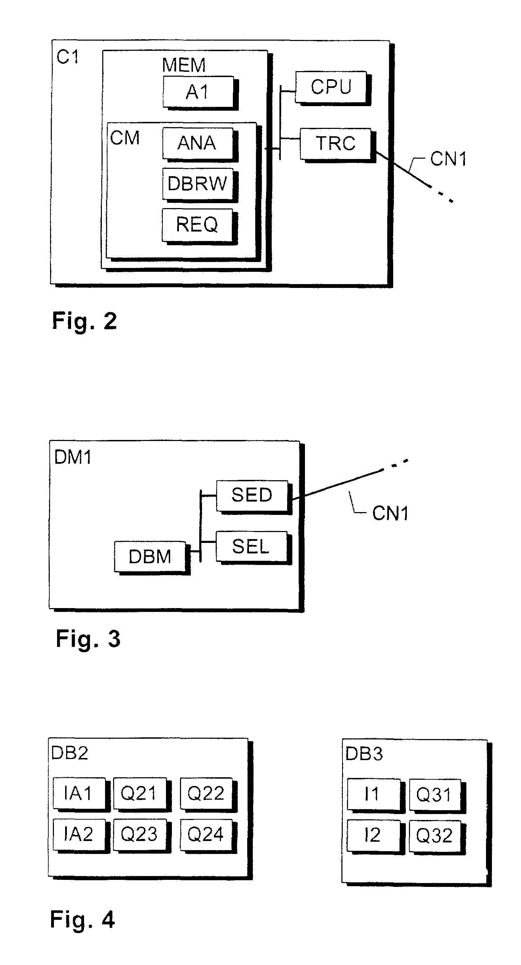

- Figur 2: eine detailliertere, jedoch schematische Ansicht des Clients C1,
- Figur 3: ein schematisch dargestelltes Client-Dienst-Managementmodul DM1 der Client-Gruppe Glund
- Figur 4: clientseitige Datenbasen DB2, DB3 der Client-Gruppen G2, G3.

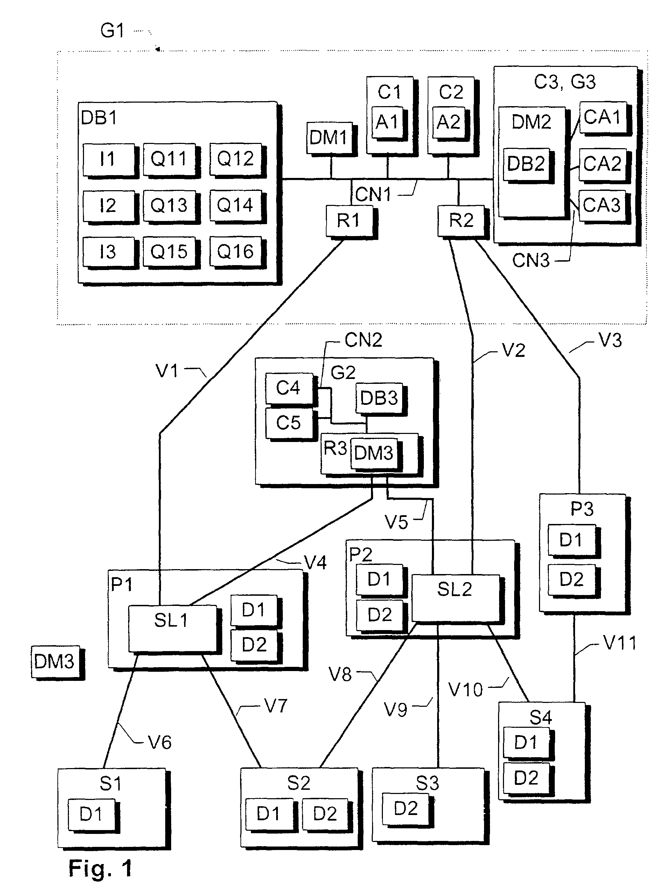

Figur 1 zeigt schematisch mehrere Ausführungsbeispiele der Erfindung, die nachfolgend im Einzelnen erläutert werden:
Bei einer Client-Gruppe G1 sind Clients C1, C2, C3, bei denen es sich beispielsweise als Client-Rechner arbeitende Personal-Computer handelt, über ein Client-Netzwerk CN1 miteinander verbunden, bei dem es sich beispielsweise um ein Fast-Ethernet-LAN handelt. Über als Schnittstelleneinrichtung dienende Router R1, R2 können die Clients C1 - C3 der Client-Gruppe G1 Verbindungen V1, V2, V3 zu Proxy-Servern P1, P2 bzw. P3 aufbauen. Der Router R1 bedient die Verbindung V1, der Router R2 die Verbindungen V2, V3. Die Verbindungen V1 bis V3 führen beispielsweise über nicht dargestellte Weitverkehrsnetze, z.B. über eines oder mehrere Telefonnetzwerke. Jedenfalls wird vorliegende auf den Verbindungen V1 - V3 jeweils mit geringerer Datenrate übertragen als auf dem Client-Netzwerk CN1.

Die Proxy-Server sind im Ausführungsbeispiel Server, die die Clients C1 - C3 sowie Clients C4, C5 einer später noch beschriebenen Client-Gruppe G2 und weitere, nicht dargestellte Clients und/oder Client-Gruppen mit Videodaten versorgen können. Die Proxy-Server P1 - P3 dienen zur lokalen Verteilung der Videodaten, die von Quell-Servern S1 - S4 bereitgestellt werden. Die Quell-Server S1 - S4 befinden sich beispielsweise in den USA, die Proxy-Server P1 - P3 in Europa. Zur Übertragung der Videodaten wird beispielsweise ein Echtzeitprotokoll oder ein sogenanntes Echtzeit-Streaming-Protokoll verwendet. Der Proxy-Server P1 kann Videodaten D1 über ein Verbindung V6 vom Quell-Server S1 oder alternativ über eine Verbindung V7 vom Quell-Server S2 laden. Hierfür ist beim Proxy-Server P1ein Auswahlmodul SL1 vorgesehen, das die Videodaten D1 vom Quell-Server S1 oder S2 je nach deren Verfügbarkeit lädt. Dieselbe Funktion wie das Auswahlmodul SL1 führt ein Auswahlmodul SL2 beim Proxy-Server P2 aus, das die Videodaten D1, D2 über eine Verbindung V8 von dem Quell-Server S2, über eine Verbindung V9 von dem Quell-Server S3 oder über eine Verbindung V10 von dem Quell-Server S4 lädt. Der Proxy-Server P3 lädt über eine Verbindung V11 Videodaten vom Quell-Server S4.

in einer an das Client-Netzwerk CN1 angeschlossenen clientseitigen Datenbank DB1 sind Identifizierer I1 - I3 abgelegt, mit denen die Proxy-Server P1 - P3 identifiziert werden können. Die Identifizierer I1 - I3 können beispielsweise Adressangaben für die Proxy-Server P1 - P3 sein. Jedenfalls identifizieren die Identifizierer I1 - I3 eine Dienst-Ressource, die für die Client-Gruppe G1 bereit steht.

Wenn beispielsweise der Client C1 die Videodaten D1 benötigt, beispielsweise weil ein Benutzer des Clients C1 einen bestimmten Videofilm sehen möchte, muss der Client C1 diese Videodaten von einem der Proxy-Server P1 - P3 anfordern. Der Client C1 sendet dann beispielsweise eine Anforderung an die Datenbasis DB1, um die Identifizierer I1 - 13 zu erfahren. Bei einem konventionellen System müsste der Client C1 irgendeinen der Proxy-Server P1 - P3, beispielsweise nach dem Zufallsprinzip, auswählen um von diesem die Videodaten D1 anzufordern. Beim erfindungsgemäßen System jedoch sind zu dem Identifizierer I1 Qualitätsmerkmale Q11, Q12, zum Identifizierer 12 Qualitätsmerkmale Q13, Q14 und zum Identifizierer 13 Qualitätsmerkmale Q15, Q16 abgelegt. Die Qualitätsmerkmale Q11, Q13, Q15 stehen beispielsweise für die jeweilige Verfügbarkeit der Proxy-Server P1 - P3, die Qualitätsmerkmale Q12, Q14, Q16 für deren jeweilige Antwortzeit. Weitere Qualitätsmerkmale können beispielsweise die Qualitäten der Verbindungen V1, V2, V3 zu den Proxy-Servern P1 - P3 sein sowie Gebühren, die für die Erbringung eines Dienstes, im konkreten Fall für das Herunterladen von Videodaten, durch den jeweiligen Proxy-Server P1 - P3 anfallen. Weitere Qualitätsmerkmale sind ohne weiteres möglich. Beim vorliegenden Beispiel ermittelt der Client C1 anhand der Qualitätsmerkmale Q11 - Q16, dass für das Herunterladen der Videodaten D1 der Proxy-Server P1 optimal geeignet ist. Der Client-Rechner C1 sendet darauf hin die Anforderung für die Videodaten an den Proxy-Server P1. Anfänglich liefert der Proxy-Server P1 die Videodaten D1 in der gewünschten Qualität.

Im Folgenden sei angenommen, dass der Proxy-Server P1 aufgrund weiterer Anforderungen in eine Überlastsituation gerät, beispielsweise weil zusätzlich zum Client C1 der Client C4 die Videodaten D1 bei ihm anfordert. Die verschlechterte Qualität der Diensterbringung wird vom Client C1 ermittelt und in die Datenbasis DB1 eingetragen, beispielsweise wird der Wert des Qualitätsmerkmales Q11 herabgesetzt. Wenn nun der Client C2 die Videodaten D1 benötigt, so kann er anhand der Datenbasis DB1 ermitteln, dass der Proxy-Server P1 momentan die Videodaten D1 nicht mit der erforderlichen Qualität liefern kann. Der Proxy-Server P2 hingegen wäre dazu in der Lage. Dies kann der Client C2 beispielsweise daran ermitteln, dass der Wert des Qualitätsmerkmales Q13 höher ist als der Wert des Qualitätsmerkmales Q11.

Der Client C2 sendet daraufhin seine Anforderung zum Senden der Videodaten D1 an den Proxy-Server P2. Auch der Client C2 ermittelt, in welcher Qualität die Videodaten D1 geliefert werden. Entsprechend ändert der Client C2 den Wert des Qualitätsmerkmales Q13. Verringern sich bei der Übertragung der Videodaten D1 beispielsweise die dafür anfallenden Gebühren, verändert der Client C2 den Wert des Qualitätsmerkmales Q14 entsprechend.

Die Lastsituation eines Proxy-Servers P1, P2 oder P3 hängt von verschiedenen Einflussgrößen ab, beispielsweise von der Tagezeit (abends werden besonders viele Videodaten angefordert), von der Leistungsfähigkeit des jeweiligen Rechners (Prozessorleistung oder dergleichen) und/oder der Anzahl der angeschlossenen Client-Rechner. Ein besonderes Problem beim Laden von Videodaten ist, dass der Anmeldevorgang bei einem Proxy-Server einige Sekunden, teilweise bis zu einer Minute dauern kann, wobei der Client bereits Videodaten in einen Puffer-Zwischenspeicher lädt, und dass während des Anmeldevorganges das Anzeigen von Videodaten noch nicht möglich ist. Es ist daher wenig sinnvoll, dass während der Wiedergabe eines Videos zwischen verschiedenen Proxy-Servern P1 - P3 umgeschaltet wird. Bei einer kurzfristigen Unterbrechung eines Ladevorganges, beispielsweise einer Lastspitze, wird daher nicht unmittelbar von einem Proxy-Server auf einen anderen Proxy-Server umgeschaltet. In diesem Zusammenhang ist es auch wesentlich, dass Qualitätsbewertungen in Bezug auf die jeweils erbrachte Dienstqualität jeweils einen längeren Beobachtungshorizont aufweisen, d.h., es wird über längere Zeit beobachtet und analysiert, in welcher Qualität die jeweiligen Videodaten von einem Proxy-Server P1 - P3 geliefert werden.

Im Unterschied zu den Clients C1, C2 ermittelt der Client C3 zwar anhand der Datenbasis DB1, welcher der Proxy-Server P1 - P3 zum Laden der Videodaten D1 oder D2 optimal geeignet ist. Allerdings verändert der Client C3 die Werte der Qualitätsmerkmale Q11 - Q16 nicht, sofern sich bei der Übertragung der jeweiligen Videodaten ein Qualitätskriterium verändert. Der Client C3 profitiert zwar von den "Erfahrungen", die die Clients C1, C2 in Form der Qualitätsmerkmale Q11 - Q16 in die Datenbasis DB1 eintragen, trägt aber zu deren Pflege nichts bei.

Bei der Datenbasis DB1 kann es sich z.B. um eine Datenbank, um eine auf einem Rechner der Client-Gruppe abgelegte Datei oder ein dort vorgesehenes Dateiverzeichnis oder um einen temporären, beispielsweise in einem RAM (Random Access Memory) befindlichen Speicherbereich handeln, in die bzw. in den die Clients C1, C2 die Qualitätsmerkmale Q11 - Q16 eintragen. Es versteht sich, dass die Datenbasis DB1 bei der Inbetriebnahme der Client-Gruppe G1 leer sein kann, d.h. dass zwar die Identifizierer 11 - 13 eingetragen sind, die Qualitätsmerkmale Q11 - Q16 durch die Clients C1, C2 bei der jeweils ersten Anforderung eines Dienstes bei den Proxy-Servern P1 - P3 ermittelt werden und in die Datenbasis DB1 eingetragen werden. Es ist auch denkbar, dass für die Qualitätsmerkmale Q11 - Q16 typische Erfahrungswerte, beispielsweise Mittelwerte, eingetragen sind.

Wenn die Qualitätsmerkmale Q11 - Q16 für zwei oder mehr der Identifizierer 11 - 13 im Wesentlichen übereinstimmen, sind die jeweiligen Proxy-Server P1 - P3 für die Erbringung eines Dienstes im Grunde genommen gleich gut geeignet. Dies kann dazu führen, dass beispielsweise jeder der Clients C1 - C3 eine Anforderung für die Videodaten D2 an den Proxy-Server P1 sendet. Dies könnte jedoch zu einer Überlastung des Proxy-Servers P1 führen. Daher ist es zweckmäßigerweise vorgesehen, dass bei im Wesentlichen gleichen Qualitätsmerkmalen Q11 - Q16 von zumindest zwei Proxy-Servern P1 - P3 einer von diesen nach einem Zufallsprinzip ausgewählt wird. Beispielsweise könnten die Qualitätsmerkmale Q11, Q12 bzw. Q13, Q14 zu den Identifizierern 11 bzw. 12 gleich lauten. Die Clients C1 - C3 könnten die Identifizierer 11 bzw. 12 dann nach dem Zufallsprinzip auswählen. Es ist auch möglich, dass die Identifizierer I1, I2 in einem solchen Fall abwechselnd ausgewählt werden.

Die Datenbasis DB1 kann auch durch eine Datenbank-Applikation beispielsweise ein entsprechendes Programm, verwaltet werden. Die Clients C1, C2 senden in einem solchen Fall Anforderungen zum Verändern oder zum Auslesen der Werte der Qualitätsmerkmale Q11 - Q16 an die entsprechende Datenbank-Applikation. Die Datenbasis DB1 kann jedoch auch in einem der Clients C1, C2 oder C3 enthalten sein. Beispielhaft für die Clients C1 - C3 wird im Folgenden der Client C1 näher erläutert:
Der Client C1 ist beim Ausführungsbeispiel ein Personal-Computer mit Speichermitteln MEM, bei denen es sich beispielsweise um RAM-Bausteine, Festplattenlaufwerke oder dergleichen handelt, mit einem Steuermittel CPU, bei dem es sich beispielsweise um einen Prozessor oder um einen Cluster von Prozessoren handelt sowie mit Verbindungsmitteln TRC, die zur Verbindung mit dem Client-Netzwerk CN1 dienen und bei denen es sich beispielsweise um eine Fast-Ethernet-Schnittstellenkarte handelt. Weitere Komponenten des Clients C1, beispielsweise ein Monitor, eine Tastatur oder eine Maus sind aus Gründen der Vereinfachung im Ausführungsbeispiel nicht gezeigt. Die Steuermittel CPU steuern die Funktionen des Clients C1 unter Kontrolle eines Betriebssystems, beispielsweise von Unix, sowie unter Mitwirkung von Programm-Modulen, beispielsweise von einem Applikations-Modul A1 und einem Client-Modul CM, die in den Speichermitteln MEM gespeichert sind und die Programmcode aufweisen, der vom Steuermittel CPU ausgeführt werden kann.

Das Client-Modul CM enthält Analysemittel ANA, mit denen das Client-Modul CM die Qualität von Diensten ermitteln kann, die die Proxy-Server P1 - P3 für den Client C1 bringen, Sende- und Schreibmittel DBRW, mit denen das Client-Modul CM die derart ermittelten Qualitätsmerkmale an die Datenbasis DB1 übermitteln kann sowie Anforderungsmittel REQ, mit denen das Client-Modul CM anhand der in der Datenbasis DB1 eingetragenen Daten einen geeigneten Proxy-Server P1, P2 oder P3 zur Erbringung von einem Dienst, nämlich dem Senden von Videodaten D1 oder D2 auswählen kann. Die Analysemittel ANA, die Sende- oder Schreibmittel DBRW und die Anforderungsmittel REQ sind beispielsweise Programmfunktionen. Das Client-Modul CM ist beispielsweise in einer Hochsprache, z.B. C, C++ oder JAVA, erstellt und mittels eines Compilers in Programmcode übersetzt, der vom Steuermittel CPU ausgeführt werden kann.

Mit Hilfe des Client-Moduis CM kann der Client C1 die bereits weiter oben beschriebenen Funktionen ausführen, bei denen einer der Proxy-Server P1 - P3 zur Erbringung eines Dienstes, nämlich dem Laden von Videodaten D1 ausgewählt wurde. Ferner führt das Client-Modul CM mittels der Analysemittel ANA eine Qualitätsbewertung der in diesem Zusammenhang erbrachten Dienste durch. Das Client-Modul CM kann auch in den Clients C2 und C3 enthalten sein und von in diesen jeweils enthaltenen Steuermitteln ausgeführt werden. Es ist aber auch möglich, dass anstatt des Client-Moduls CM geeignete Hardware-Baugruppen bei den Clients C1 - C3 vorgesehen sind.

Weiter können die Clients C1 - C3 ein Client-Dienst-Managementmodul DM1, das im folgenden verkürzt als Managementmodul DM1 bezeichnet wird, mit der Auswahl eines geeigneten Proxy-Servers P1 - P3 anhand der in der Datenbasis DB1 gespeicherten Qualitätsmerkmale Q11 - Q16 zur Erbringung eines Dienstes für den jeweiligen Client C1 - C3 beauftragen. Selbst wenn bei den Clients C1 - C3 Client-Module CM mit Anforderungsmitteln REQ vorgesehen sind, muss dieses an sich nicht unbedingt enthalten sein, da dessen Funktion auch von dem Managementmodul DM1 ausgeführt werden kann. Dies wird im Folgenden näher erläutert:
Das Managementmodul DM1 bildet einen Bestandteil der Client-Gruppe G1 und ist an das Client-Netzwerk CN1 angeschlossen. Das Managementmodul DM1 ist beispielsweise ein Rechner, der über Sende- und Empfangsmittel SED sowie über Auswahlmittel SEL verfügt, deren jeweilige Funktionen doch erläutert werden. Das Managementmodul DM1 kann als Hardware realisiert sein oder als Software, die von einem Rechner, beispielsweise einem Personal-Computer, ausgeführt wird. Die vorgenannten Sende- und Empfangsmittel bzw. die Auswahlmittel sind dann als entsprechende Programmfunktionen realisiert. Es ist auch möglich, dass das Managementmodul DM1 ein von einem der Clients C1 - C3 ausgeführtes Programm-Modul ist.

Im Folgenden sei angenommen, dass der Client C2 nicht über ein Clientmodul CM1 verfügt. Der Client C2 sendet daher eine Dienst-Anforderung zum Laden von Videodaten D2 zunächst an das Managementmodul DM1. Dieses empfängt die entsprechende Dienstanforderung mit seinen Empfangsmitteln SED und gibt sie weiter an Auswahlmittel SEL, die anhand der in der Datenbasis DB1 eingetragenen Qualtiätsmerkmale Q11 - Q16 beispielsweise ermitteln, dass zum Laden der Videodaten D2 der Proxy-Server P1 momentan am besten geeignet ist. Daher senden die Sende- und Empfangsmittel SED eine Anforderung zum Laden der Videodaten D2 über den Router R1 an den Proxy-Server P1, der daraufhin die Videodaten D2 an den Client C2 sendet.

Der Client C2 analysiert, in welcher Qualität dieser Dienst durch den Proxy-Server P1 erbracht wird. Das entsprechende Ergebnis der Analyse trägt der Client C2 beispielsweise selbst in die Datenbasis DB1 ein. Es ist jedoch auch möglich, dass der Client C2 die entsprechenden Qualitätsmerkmale an das Managementmodul DM1 übermittelt, welches die Qualitätsmerkmale dann mittels seiner Verwaltungsmittel DBM in die clientseitige Datenbasis DB1 bezüglich des den jeweiligen Dienst erbringenden Servers, im Beispiel des bezüglich des Proxy-Servers P1, in die Datenbasis DB1 einträgt.

Eine weitere Ausführungsform der Erfindung wird im Folgenden anhand der Client-Gruppe G2 mit den Clients C4 und C5 näher erläutert. Die Clients C4, C5 sind über ein Client-Netzwerk CN2, das beispielsweise ein lokales Netzwerk mit hoher Datenrate und/oder großer Zuverlässigkeit ist, mit einem Router R3 verbunden, der den Clients C4, C5 über Verbindungen V4, V5 Zugang zu den Proxy-Servern P1, P2 bzw. zu deren Diensten ermöglicht. Die Verbindungen V4, V5, sind im Vergleich zum Client-Netzwerk CN1 beispielsweise weniger zuverlässig, z.B. weil es vergleichsweise häufig zu Überlastsituationen auf diesen Verbindungen kommen kann, und/oder erlauben eine Übertragung von Daten mit geringerer Datenrate, als es beim Client-Netzwerk CN2 der Fall ist.

Im Unterschied zu den Clients C1 - C3 ist in den Clients C4, C5 kein Client-Modul CM enthalten. Stattdessen ist bei dem Router R3, der eine Schnittstelleneinrichtung darstellt, ein Client-Dienst-Managementmodul DM3 enthalten, dass im Grunde genommen dieselben Funktionen ausführt, wie das Dienst-Managementmodul DM1 der Client-Gruppe G1. Allerdings ist das Managementmodul DM3 ein vom Router R3 bzw. von einem nicht dargestellten Prozessor des Routers R3 ausgeführtes Programm-Modul.

Ferner ist bei der Client-Gruppe G2 eine Datenbasis DB3 vorgesehen, die als separate Einheit ausgeführt ist und über das Client-Netzwerk CN2 mit den Clients C4, C5 und dem Router R3 verbunden ist. Die clientseitige Datenbasis DB3 könnte jedoch auch im Router R3, beispielsweise als eine Datei, ein Verzeichnissystem oder als ein Datenbank-Modul, enthalten sein.

Die Clients C4, C5 senden jeweils Anforderungen zum Erbringen eines Dienstes, beispielsweise zum Laden von Videodaten D1 oder D2 an den Router R3. Dessen Managementmodul DM3 ermittelt dann, welcher der Proxy-Server P1, P2 hierfür jeweils am besten geeignet ist. Dabei wertet das Managementmodul DM3 die Qualitätsmerkmale Q31, Q32 aus, die bezüglich von Identifizierern 11 bzw. 12 in der Datenbasis DB3 eingetragen sind. Das Managementmodul DM3 sendet dann entsprechend der Qualitätsmerkmale Q31, Q32 Dienstanforderungen zum Laden der Videodaten D1, D2 an einen der Proxy-Server P1 oder P2.

Die daraufhin erbrachten Dienste der Proxy-Server P1, P2 bewertet das Managementmodul DM3 bzw. der Router R3. Beispielsweise wird die Antwortzeit der Proxy-Server P1, P2 als ein Qualitätsmerkmal analysiert. Es ist auch möglich, dass das Managementmodul DM3 überwacht, ob die Videodaten D1 oder D2 in ausreichender Kontinuität geliefert werden. Das jeweilige Ergebnis trägt das Managementmodul DM3 in die Datenbasis DB3 als Qualitätsmerkmal Q31 oder Q32 ein.

Es ist auch möglich, dass die Qualitätsmerkmale Q31, Q32 Qualitätsindizes darstellen, in die mehrere Qualitätskriterien eingehen. Beispielsweise könnte in einen solchen Qualitätsindex die Verfügbarkeit eines jeweiligen Proxy-Servers P1, P2 sowie dessen jeweilige Antwortzeit und/oder die für das Erbringen des Dienstes durch die jeweiligen Proxy-Server P1, P2 anfallenden Gebühren eingehen. Dabei ist es möglich, dass die unterschiedlichen Kriterien gewichtet werden.

Bei allen vorgenannten Ausführungsformen der Erfindung in Bezug auf die Client-Gruppen G1, G2 wird deutlich, dass deren Clients C1 - C3 bzw. C4, C5 jeweils wechselseitig von den Erfahrungen profitieren, die von anderen Mitgliedern der jeweiligen Client-Gruppe G1, G2 in Bezug auf das Erbringen eines Dienstes durch die Proxy-Server P1 - P3 gemacht worden sind. Dabei geht in diese "Erfahrungen" nicht nur die jeweilige Qualität der Proxy-Server P1 - P3 an sich ein, beispielsweise deren jeweilige Verfügbarkeit, sondern auch die Qualität der Verbindungen V1 - V3 bzw. V4, V5. Es spielt jeweils keine nennenswerte Rolle, dass die Clients C1 - C3 bzw. C4, C5 separate Einrichtungen sind, da die diese jeweils verbindenden internen Client-Netzwerke CN1 bzw. CN2 im Vergleich zu den Verbindungen V1 - V3 bzw. V4, V5 "besser" sind, beispielsweise weil deren Übertragungsrate und/oder deren Verfügbarkeit hoch sind oder weil auf den Client-Netzwerken CN1, DN2 keine oder nur geringe Kosten für die Übertragung von Daten anfallen. Die Clients C1 - C3 bzw. C4, C5 sind jeweils sozusagen nahe beieinander. Dies gilt auch für die ihnen jeweils zugeordnete Datenbasis DB1 bzw. DB3. In diesem Zusammenhang wird auch ein Unterschied zu den Auswahlmodulen SL1, SL2 deutlich: diese profitieren nicht wechselseitig von den Erfahrungen, die das jeweils andere Auswahlmodul SL2 bzw. SL1 mit der Erbringung von Diensten durch die Server S1 - S4 gemacht hat. Beispielsweise übermittelt das Auswahlmodul SL2 dem Auswahlmodul SL1 nicht, wenn der Server S2 ausgefallen ist, infolgedessen der Server S2 einen evtl. bei ihm angeforderten Dienst, nämlich das Herunterladen von Videodaten D1 oder D2 nicht in der gewünschten Qualität, nämlich gar nicht, erbringen kann.

Ein weiteres Ausführungsbeispiel der Erfindung wird anhand der Client-Applikationen CA1, CA2, CA3 erläutert, die vom Client C3 ausgeführte Programm-Module sind und die Mitglieder einer Client-Gruppe G3 sind. Bei den Client-Applikationen CA1 - CA3 handelt es sich um Programm-Module, die von dem Client C3 beispielsweise durch einen Prozessor oder durch eine Prozessoranordnung ausgeführt werden. Beispielsweise könnte es sich bei den Client-Applikationen CA1 - CA3 jeweils um Netzwerk-Management-Programm-Module handeln, welche Netzwerkeinrichtungen, z.B. die Proxy-Server P1 - P3, überwachen und steuern.

Die Client-Applikationen CA1 - CA3 benötigen einen Dienst, der entweder von einer Dienst-Applikation A1 oder von einer Dienst-Applikation A2 erbracht werden kann. Man könnte die Dienst-Applikation A1 oder A2 auch als Server-Applikationen bezeichnen. Jedenfalls sind die Dienst-Applikationen A1, A2 im Ausführungsbeispiel Programm-Module, deren Programmcode von den Clients C1 bzw. C2 jeweils ausgeführt wird.

Die Proxy-Server P1 - P3 senden bei einer Konstellation, bei der die Client-Applikationen CA1 - CA3 Netzwerk-Management-Programm-Module sind, beispielsweise Ereignismeldungen, z.B. Alarmmeldungen, Messwertmeldungen oder dergleichen, an die Client-Applikationen CA1 - CA3 zur weiteren Verarbeitung. Diese protokollieren die jeweiligen Ereignismeldungen und/oder zeigen sie an einer Bedienoberfläche an und/oder führen eine sonstige Bearbeitung der Ereignismeldungen durch. Beispielsweise könnte einer der Proxy-Server P1 - P3 eine Überlastsituation an die Client-Applikation CA1 melden. Zur Behebung der Überlastsituation benötigt die Client-Applikation CA1 z.B. einen Dienst, der von der Dienst-Applikation A1 oder der Dienst-Applikation A2 erbracht werden kann. Bei dem Dienst könnte es sich beispielsweise um eine aufwändige Lastverteilungsberechnung handeln. Jedenfalls muss der Dienst durch eine der Dienst-Applikationen A1 oder A2 möglichst optimal erbracht werden.

Die Client-Applikation CA1 sendet eine entsprechende Dienstanforderung an ein Dienst-Managementmodul DM2, bei dem es sich um ein Programm-Modul handelt, dessen Programmcode von dem Client C3 ausgeführt wird. Das Managementmodul DM2 weist im Wesentlichen dieselbe Funktionalität wie die Managementmodule DM1, DM3 auf. Im Unterschied zu diesen weist das Managementmodul DM2 eine integrierte clientseitige Datenbasis DB2 auf, in der in Bezug auf einen Identifizierer IA1 für die Applikation A1 Qualitätsmerkmale Q21, Q22 eingetragen sind und in Bezug auf einen Identifizierer IA2 für die Applikation A2 Qualitätsmerkmale Q23, Q24. Bei den Qualitätsmerkmalen Q21- Q24 handelt es sich beispielsweise um das jeweilige Antwortverhalten der Applikationen A1, A2 auf eine Dienstanforderung hin. Ferner gehen in die Qualitätsmerkmale Q21-Q24 beispielsweise auch die jeweilige Prozessorleistung der Clients C1 oder C2, deren jeweilige Schnittstellenperformance zum Client-Netzwerk CN1 oder dergleichen ein. Jedenfalls wählt das Managementmodul DM2 anhand der in der Datenbasis DB2 eingetragenen Qualitätsmerkmale Q21 - Q24 diejenige Applikation A1 oder A2 aus, die die von der Client-Applikation CA1 gesendete Dienstanforderung mit der besten Dienstqualität bearbeiten kann. Dementsprechend sendet das Managementmodul DM2 eine entsprechende Dienstanforderung an eine der Applikationen A1 oder A2, z.B. die Applikation A1. Die Qualität des im Anschluss daran durch die jeweilige Applikation A1 oder A2 erbrachten Dienstes wird durch das Managementmodul DM2 und/oder durch die jeweilige Client-Applikation CA1 - CA3 analysiert. Das jeweilige Ergebnis wird in die clientseitige Datenbasis DB2 eingetragen.

Beliebige Kombinationen der in den Ansprüchen sowie in der Beschreibung angegebenen Maßnahmen sind ohne Weiteres möglich. Ferner sind weitere Ausgestaltungen der Erfindung jederzeit möglich:
Beispielsweise könnte bei dem Client C3 nur die Datenbasis DB2, nicht jedoch das Managementmodul DM2 vorgesehen sein. Die Client-Applikation CA1 - CA3 würden dann die Pflege der Datenbasis DM2 selbst vornehmen, also die Qualitätsmerkmale Q21 - Q24 selbst eintragen. Ferner würden die Client-Applikationen CA1 - CA3 jeweils selbst anhand der Datenbasis DB2 ermitteln, welche der Dienst-Applikationen A1 oder A2 für eine Dienstanforderung die erforderliche Dienst-Qualität liefem kann.

## Patentansprüche

1. Verfahren für ein verteiltes System zur Erbringung mindestens eines Dienstes, der jeweils von einem ersten Server (P1-P3; A1, A2) oder mindestens einem zweiten Server (P1-P3; A1, A2) für einen ersten Client (C1-C3; C4, C5; CA1-CA3) oder mindestens einen zweiten Client (C1-C3; C4, C5; CA1-CA3) einer Client-Gruppe (G1; G2; G3) erbracht werden kann,
- bei dem beim Erbringen des mindestens einen Dienstes durch den ersten Server (P1-P3; A1, A2) oder den mindestens einen zweiten Server (P1-P3; A1, A2) für einen der Clients (C1-C3; C4, C5; CA1-CA3) der Client-Gruppe (G1; G2; G3) mindestens ein Qualitätsmerkmal (Q11-Q16; Q21-Q24; Q31, Q32) ermittelt wird, das mindestens eine Qualität des Erbringens des Dienstes durch den ersten Server (P1-P3; A1, A2) bzw. den mindestens einen zweiten Server (P1-P3; A1, A2) kennzeichnet,
- bei dem das mindestens eine Qualitätsmerkmal (Q11-Q16; Q21-Q24; Q31, Q32) in eine der Client-Gruppe (G1; G2; G3) zugeordnete clientseitige Datenbasis (DB1; DB2; DB3) bezüglich des ersten Servers (P1-P3; A1, A2) bzw. des mindestens einen zweiten Servers (P1-P3; A1, A2) eingetragen wird, und
- bei dem bei einer Anforderung des mindestens einen Dienstes für einen der Clients (C1-C3; C4, C5; CA1-CA3) der Client-Gruppe (G1; G2; G3) der erste oder der mindestens eine zweite Server (P1-P3; A1, A2) anhand des in der clientseitigen Datenbasis (DB1; DB2; DB3) eingetragenen mindestens einen Qualitätsmerkmals (Q11-Q16; Q21-Q24; Q31, Q32) ausgewählt wird.

2. Verfahren nach Anspruch 1, **dadurch gekennzeichnet, dass** der erste und/oder der mindestens eine zweite Client (C1-C3; C4, C5; CA1-CA3) das mindestens eine Qualitätsmerkmal (Q11-Q16; Q21-Q24; Q31, Q32) ermitteln.

3. Verfahren nach Anspruch 1, **dadurch gekennzeichnet, dass** der erste und der mindestens eine zweite Client (C1-C3; C4, C5; CA1-CA3) jeweils bei einer Anforderung des mindestens einen Dienstes den ersten oder den mindestens einen zweiten Server (P1-P3; A1, A2) anhand des in der clientseitigen Datenbasis (DB1; DB2; DB3) eingetragenen mindestens einen Qualitätsmerkmals (Q11-Q16; Q21-Q24; Q31, Q32) auswählen.

4. Verfahren nach Anspruch 1, **dadurch gekennzeichnet, dass** der erste oder der mindestens eine zweite Client (C1-C3; C4, C5; CA1-CA3) eine Anforderung des mindestens einen Dienstes an ein Client-Dienst-Managementmodul (DM1; DM2; DM3) der Client-Gruppe (G1; G2; G3) senden, und dass das Client-Dienst-Managementmodul (DM1; DM2; DM3) den ersten oder den mindestens einen zweiten Server (P1-P3; A1, A2) anhand des in der clientseitigen Datenbasis (DB1; DB2; DB3) eingetragenen mindestens einen Qualitätsmerkmals (Q11-Q16; Q21-Q24; Q31, Q32) auswählt und die Anforderung des mindestens einen Dienstes an den jeweiligen ersten oder mindestens einen zweiten Server (P1-P3; A1, A2) sendet.

5. Verfahren nach Anspruch 4, **dadurch gekennzeichnet, dass** das Client-Dienst-Managementmodul (DM1; DM2; DM3) das mindestens eine Qualitätsmerkmal (Q11-Q16; Q21-Q24; Q31, Q32) bezüglich des ersten und des mindestens einen zweiten Servers (P1-P3; A1, A2) in die clientseitige Datenbasis (DB1; DB2; DB3) einträgt.

6. Verfahren nach Anspruch 4, **dadurch gekennzeichnet, dass** das Client-Dienst-Managementmodul (DM1; DM2; DM3) in dem ersten und/oder dem mindestens einen zweiten Client (C1-C3; C4, C5; CA1-CA3) und/oder einer Schnittstelleneinrichtung der Client-Gruppe (G1; G2; G3) enthalten ist, mit der eine Verbindung zwischen den Clients (C1-C3; C4, C5; CA1-CA3) der Client-Gruppe (G1; G2; G3) und dem ersten Server (P1-P3; A1, A2) oder dem mindestens einen zweiten Server (P1-P3; A1, A2) aufbaubar ist.

7. Verfahren nach Anspruch 1, **dadurch gekennzeichnet, dass** bei einer Anforderung des mindestens einen Dienstes für einen der Clients (C1-C3; C4, C5; CA1-CA3) der Client-Gruppe (G1; G2; G3) der erste oder der mindestens eine zweite Server (P1-P3; A1, A2) anhand einer Zufallsauswahl und/oder nach einem vorbestimmten Lastverteilungskriterium ausgewählt wird, wenn die Qualitätsmerkmale (Q11-Q16; Q21-Q24; Q31, Q32) für die mindestens eine Qualität des Dienst-Erbringens durch den ersten bzw. den mindestens einen zweiten Server (P1-P3; A1, A2) in der clientseitigen Datenbasis (DB1; DB2; DB3) im Wesentlichen übereinstimmen.

8. Verfahren nach Anspruch 1, **dadurch gekennzeichnet, dass** die Mitglieder der Client-Gruppe (G1; G2; G3) nahe beieinander angeordnet sind.

9. Verfahren nach Anspruch 1, **dadurch gekennzeichnet, dass** jeweils als das mindestens eine Qualitätsmerkmal (Q11-Q16; Q21-Q24; Q31, Q32) die jeweilige Verfügbarkeit des ersten bzw. des mindestens einen zweiten Servers (P1-P3; A1, A2) und/oder deren jeweilige Antwortzeit und/oder die Qualität einer jeweiligen Verbindung zu dem ersten bzw. dem mindestens einen zweiten Server (P1-P3; A1, A2) und/oder für das Erbringen des mindestens einen Dienstes durch den ersten oder den mindestens einen zweiten Server (P1-P3; A1, A2) anfallende Gebühren ermittelt wird.

10. Client eines verteilten Systems, für den ein Dienst von einem ersten Server (P1-P3; A1, A2) oder mindestens einem zweiten Server (P1-P3; A1, A2) erbracht werden kann und der zum Zusammenwirken mit mindestens einem zweiten Client (C1-C3; C4, C5; CA1-CA3) der Client-Gruppe (G1; G2; G3) ausgestaltet ist,
- mit Analysemitteln (ANA), die derart ausgestaltet sind, dass der Client (C1-C3; C4, C5; CA1-CA3) beim Erbringen des mindestens einen Dienstes durch den ersten Server (P1-P3; A1, A2) oder den mindestens einen zweiten Server (P1-P3; A1, A2) mindestens ein Qualitätsmerkmal (Q11-Q16; Q21-Q24; Q31, Q32) ermitteln kann, das mindestens eine Qualität des Erbringens des Dienstes durch den ersten Server (P1-P3; A1, A2) bzw. den mindestens einen zweiten Server (P1-P3; A1, A2) kennzeichnet,
- mit Sende- oder Schreibmitteln (DBRW), die derart ausgestaltet sind, dass der Client (C1-C3; C4, C5; CA1-CA3) das mindestens eine Qualitätsmerkmal (Q11-Q16; Q21-Q24; Q31, Q32) bezüglich des ersten Servers (P1-P3; A1, A2) bzw. des mindestens einen zweiten Servers (P1-P3; A1, A2) an eine der Client-Gruppe (G1; G2; G3) zugeordnete clientseitige Datenbasis (DB1; DB2; DB3) übermitteln bzw. in diese eintragen kann, so dass bei einer Anforderung des mindestens einen Dienstes für den Client (C1-C3; C4, C5; CA1-CA3) oder den mindestens einen zweiten Client (C1-C3; C4, C5; CA1-CA3) der erste oder der mindestens eine zweite Server (P1-P3; A1, A2) anhand des in der clientseitigen Datenbasis (DB1; DB2; DB3) eingetragenen mindestens einen Qualitätsmerkmals (Q11-Q16; Q21-Q24; Q31, Q32) auswählbar ist.

11. Client nach Anspruch 10, **dadurch gekennzeichnet, dass** er Anforderungsmittel (REQ) aufweist, die derart ausgestaltet sind, dass der Client (C1-C3; C4, C5; CA1-CA3) bei einer Anforderung des mindestens einen Dienstes den ersten oder den mindestens einen zweiten Server (P1-P3; A1, A2) anhand des in der clientseitigen Datenbasis (DB1; DB2; DB3) eingetragenen mindestens einen Qualitätsmerkmals (Q11-Q16; Q21-Q24; Q31, Q32) auswählen kann.

12. Client-Dienst-Managementmodul für eine Client-Gruppe (G1; G2; G3) mit einem ersten und mindestens einem zweiten Client (C1-C3; C4, C5; CA1-CA3), für die mindestens ein Dienst von einem ersten Server (P1-P3; A1, A2) oder mindestens einem zweiten Server (P1-P3; A1, A2) erbracht werden kann,
- mit Empfangsmitteln (SED) zum Empfangen einer von dem ersten oder dem mindestens eine zweiten Client (C1-C3; C4, C5; CA1-CA3) gesendeten Anforderung für den mindestens einen Dienst,
- mit Auswahlmitteln (SEL) zum Auswählen des ersten oder des mindestens einen zweiten Servers (P1-P3; A1, A2) anhand mindestens eines in einer der Client-Gruppe (G1; G2; G3) zugeordneten clientseitigen Datenbasis (DB1; DB2; DB3) bezüglich des ersten Servers (P1-P3; A1, A2) bzw. des mindestens einen zweiten Servers (P1-P3; A1, A2) eingetragenen Qualitätsmerkmals (Q11-Q16; Q21-Q24; Q31, Q32), und
- mit Sendemitteln (SED) zum Senden der Anforderung für den mindestens einen Dienst an den jeweils ausgewählten ersten oder mindestens einen zweiten Server (P1-P3; A1, A2).

13. Client-Dienst-Managementmodul nach Anspruch 12, **dadurch gekennzeichnet, dass** es Verwaltungsmittel (DBM) zum Eintragen des in der clientseitigen Datenbasis (DB1; DB2; DB3) bezüglich des ersten Servers (P1-P3; A1, A2) bzw. des mindestens einen zweiten Servers (P1-P3; A1, A2) Qualitätsmerkmals (Q11-Q16; Q21-Q24; Q31, Q32) aufweist.

14. Datenbasis (DB1; DB2; DB3) für eine Client-Gruppe (G1; G2; G3) mit einem ersten und mindestens einem zweiten Client (C1-C3; C4, C5; CA1-CA3), für die mindestens ein Dienst von einem ersten Server (P1-P3; A1, A2) oder mindestens einem zweiten Server (P1-P3; A1, A2) erbracht werden kann,
- in die mindestens ein Qualitätsmerkmal (Q11-Q16; Q21-Q24; Q31, Q32) bezüglich des ersten Servers (P1-P3; A1, A2) bzw. des mindestens einen zweiten Servers (P1-P3; A1, A2) eintragbar ist, wobei das mindestens eine Qualitätsmerkmal (Q11-Q16; Q21-Q24; Q31, Q32) beim Erbringen des mindestens einen Dienstes durch den ersten Server (P1-P3; A1, A2) oder den mindestens einen zweiten Server (P1-P3; A1, A2) für einen der Clients (C1-C3; C4, C5; CA1-CA3) der Client-Gruppe (G1; G2; G3) ermittelbar ist und mindestens eine Qualität des Erbringens des Dienstes durch den ersten Server (P1-P3; A1, A2) bzw. den mindestens einen zweiten Server (P1-P3; A1, A2) kennzeichnet,
- und aus der das mindestens eine Qualitätsmerkmal (Q11-Q16; Q21-Q24; Q31, Q32) bei einer Anforderung des mindestens einen Dienstes für einen der Clients (C1-C3; C4, C5; CA1-CA3) der Client-Gruppe (G1; G2; G3) auslesbar ist, so dass der erste oder der mindestens eine zweite Server (P1-P3; A1, A2) anhand des mindestens einen Qualitätsmerkmals (Q11-Q16; Q21-Q24; Q31, Q32) ausgewählt werden kann.

15. Client nach Anspruch 10 oder Client-Dienst-Managementmodul (DM1; DM2; DM3) nach Anspruch 12, **dadurch gekennzeichnet, dass** sie jeweils Programmcode enthalten, der von einem Steuermittel eines Client-Rechners ausgeführt werden kann.

16. Speichermittel, insbesondere Diskette oder CD-ROM, Digital Versatile Disc, Festplattenlaufwerk oder dergleichen, mit einem darauf gespeicherten Client nach Anspruch 15 und/oder einem darauf gespeicherten Client-Dienst-Managementmodul (DM1; DM2; DM3) nach Anspruch 15 und/oder einer darauf gespeicherten clientseitigen Datenbasis (DB1; DB2; DB3) nach Anspruch 14.

## Geänderte Patentansprüche

### Geänderte Patentansprüche gemäss Regel 86(2) EPÜ.

**1.** Verfahren für ein verteiltes System zur Erbringung mindestens eines Dienstes, der jeweils von einem ersten Server (P1-P3; A1, A2) oder mindestens einem zweiten Server (P1-P3; A1, A2) für einen ersten Client (C1-C3; C4, C5; CA1-CA3) oder mindestens einen zweiten Client (C1-C3; C4, C5; CA1-CA3) einer Client-Gruppe (G1; G2; G3) erbracht werden kann,
- bei dem beim Erbringen des mindestens einen Dienstes durch den ersten Server (P1-P3; A1, A2) oder den mindestens einen zweiten Server (P1-P3; A1, A2) für einen der Clients (C1-C3; C4, C5; CA1-CA3) der Client-Gruppe (G1; G2; G3) mindestens ein Qualitätsmerkmal (Q11-Q16; Q21-Q24; Q31, Q32) ermittelt wird, das mindestens eine Qualität des Erbringens des Dienstes durch den ersten Server (P1-P3; A1, A2) bzw. den mindestens einen zweiten Server (P1-P3; A1, A2) kennzeichnet,
- bei dem das mindestens eine Qualitätsmerkmal (Q11-Q16; Q21-Q24; Q31, Q32) in eine der Client-Gruppe (G1; G2; G3) zugeordnete clientseitige Datenbasis (DB1; DB2; DB3) bezüglich des ersten Servers (P1-P3; A1, A2) bzw. des mindestens einen zweiten Servers (P1-P3; A1, A2) eingetragen wird, und
- bei dem bei einer Anforderung des mindestens einen Dienstes für einen der Clients (C1-C3; C4, C5; CA1-CA3) der Client-Gruppe (G1; G2; G3) der erste oder der mindestens eine zweite Server (P1-P3; A1, A2) anhand des in der clientseitigen Datenbasis (DB1; DB2; DB3) eingetragenen mindestens einen Qualitätsmerkmals (Q11-Q16; Q21-Q24; Q31, Q32) ausgewählt wird.

**2.** Verfahren nach Anspruch 1, **dadurch gekennzeichnet, dass** der erste und/oder der mindestens eine zweite Client (C1-C3; C4, C5; CA1-CA3) das mindestens eine Qualitätsmerkmal (Q11-Q16; Q21-Q24; Q31, Q32) ermitteln.

**3.** Verfahren nach Anspruch 1, **dadurch gekennzeichnet, dass** der erste und der mindestens eine zweite Client (C1-C3; C4, C5; CA1-CA3) jeweils bei einer Anforderung des mindestens einen Dienstes den ersten oder den mindestens einen zweiten Server (P1-P3; A1, A2) anhand des in der clientseitigen Datenbasis (DB1; DB2; DB3) eingetragenen mindestens einen Qualitätsmerkmals (Q11-Q16; Q21-Q24; Q31, Q32) auswählen.

**4.** Verfahren nach Anspruch 1, **dadurch gekennzeichnet, dass** der erste oder der mindestens eine zweite Client (C1-C3; C4, C5; CA1-CA3) eine Anforderung des mindestens einen Dienstes an ein Client-Dienst-Managementmodul (DM1; DM2; DM3) der Client-Gruppe (G1; G2; G3) senden, und dass das Client-Dienst-Managementmodul (DM1; DM2; DM3) den ersten oder den mindestens einen zweiten Server (P1-P3; A1, A2) anhand des in der clientseitigen Datenbasis (DB1; DB2; DB3) eingetragenen mindestens einen Qualitätsmerkmals (Q11-Q16; Q21-Q24; Q31, Q32) auswählt und die Anforderung des mindestens einen Dienstes an den jeweiligen ersten oder mindestens einen zweiten Server (P1-P3; A1, A2) sendet.

**5.** Verfahren nach Anspruch 4, **dadurch gekennzeichnet, dass** das Client-Dienst-Managementmodul (DM1; DM2; DM3) das mindestens eine Qualitätsmerkmal (Q11-Q16; Q21-Q24; Q31, Q32) bezüglich des ersten und des mindestens einen zweiten Servers (P1-P3; A1, A2) in die clientseitige Datenbasis (DB1; DB2; DB3) einträgt.

**6.** Verfahren nach Anspruch 4, **dadurch gekennzeichnet, dass** das Client-Dienst-Managementmodul (DM1; DM2; DM3) in dem ersten und/oder dem mindestens einen zweiten Client (C1-C3; C4, C5; CA1-CA3) und/oder einer Schnittstelleneinrichtung der Client-Gruppe (G1; G2; G3) enthalten ist, mit der eine Verbindung zwischen den Clients (C1-C3; C4, C5; CA1-CA3) der Client-Gruppe (G1; G2; G3) und dem ersten Server (P1-P3; A1, A2) oder dem mindestens einen zweiten Server (P1-P3; A1, A2) aufbaubar ist.

**7.** Verfahren nach Anspruch 1, **dadurch gekennzeichnet, dass** bei einer Anforderung des mindestens einen Dienstes für einen der Clients (C1-C3; C4, C5; CA1-CA3) der Client-Gruppe (G1; G2; G3) der erste oder der mindestens eine zweite Server (P1-P3; A1, A2) anhand einer Zufallsauswahl und/oder nach einem vorbestimmten Lastverteilungskriterium ausgewählt wird, wenn die Qualitätsmerkmale (Q11-Q16; Q21-Q24; Q31, Q32) für die mindestens eine Qualität des Dienst-Erbringens durch den ersten bzw. den mindestens einen zweiten Server (P1-P3; A1, A2) in der clientseitigen Datenbasis (DB1; DB2; DB3) im Wesentlichen übereinstimmen.

**8.** Verfahren nach Anspruch 1, **dadurch gekennzeichnet, dass** die Mitglieder der Client-Gruppe (G1; G2; G3) nahe beieinander angeordnet sind.

**9.** Verfahren nach Anspruch 1, **dadurch gekennzeichnet, dass** jeweils als das mindestens eine Qualitätsmerkmal (Q11-Q16; Q21-Q24; Q31, Q32) die jeweilige Verfügbarkeit des ersten bzw. des mindestens einen zweiten Servers (P1-P3; A1, A2) und/oder deren jeweilige Antwortzeit und/oder die Qualität einer jeweiligen Verbindung zu dem ersten bzw. dem mindestens einen zweiten Server (P1-P3; A1, A2) und/oder für das Erbringen des mindestens einen Dienstes durch den ersten oder den mindestens einen zweiten Server (P1-P3; A1, A2) anfallende Gebühren ermittelt wird.

**10.** Verfahren nach Anspruch 1, **dadurch gekennzeichnet, dass** der mindestens eine Dienst von dem ersten Client (C1-C3; C4, C5; CA1-CA3) bzw. mindestens einen zweiten Client (C1-C3; C4, C5; CA1-CA3) der Client-Gruppe (G1; G2; G3) tatsächlich genutzt wird.

**11.** Client eines verteilten Systems, für den ein Dienst von einem ersten Server (P1-P3; A1, A2) oder mindestens einem zweiten Server (P1-P3; A1, A2) erbracht werden kann und der zum Zusammenwirken mit mindestens einem zweiten Client (C1-C3; C4, C5; CA1-CA3) der Client-Gruppe (G1; G2; G3) ausgestaltet ist,
- mit Analysemitteln (ANA), die derart ausgestaltet sind, dass der Client (C1-C3; C4, C5; CA1-CA3) beim Erbringen des mindestens einen Dienstes durch den ersten Server (P1-P3; A1, A2) oder den mindestens einen zweiten Server (P1-P3; A1, A2) mindestens ein Qualitätsmerkmal (Q11-Q16; Q21-Q24; Q31, Q32) ermitteln kann, das mindestens eine Qualität des Erbringens des Dienstes durch den ersten Server (P1-P3; A1, A2) bzw. den mindestens einen zweiten Server (P1-P3; A1, A2) kennzeichnet,
- mit Sende- oder Schreibmitteln (DBRW), die derart ausgestaltet sind, dass der Client (C1-C3; C4, C5; CA1-CA3) das mindestens eine Qualitätsmerkmal (Q11-Q16; Q21-Q24; Q31, Q32) bezüglich des ersten Servers (P1-P3; A1, A2) bzw. des mindestens einen zweiten Servers (P1-P3; A1, A2) an eine der Client-Gruppe (G1; G2; G3) zugeordnete clientseitige Datenbasis (DB1; DB2; DB3) übermitteln bzw. in diese eintragen kann, so dass bei einer Anforderung des mindestens einen Dienstes für den Client (C1-C3; C4, C5; CA1-CA3) oder den mindestens einen zweiten Client (C1-C3; C4, C5; CA1-CA3) der erste oder der mindestens eine zweite Server (P1-P3; A1, A2) anhand des in der clientseitigen Datenbasis (DB1; DB2; DB3) eingetragenen mindestens einen Qualitätsmerkmals (Q11-Q16; Q21-Q24; Q31, Q32) auswählbar ist.

**12.** Client nach Anspruch 11, **dadurch gekennzeichnet, dass** er Anforderungsmittel (REQ) aufweist, die derart ausgestaltet sind, dass der Client (C1-C3; C4, C5; CA1-CA3) bei einer Anforderung des mindestens einen Dienstes den ersten oder den mindestens einen zweiten Server (P1-P3; A1, A2) anhand des in der clientseitigen Datenbasis (DB1; DB2; DB3) eingetragenen mindestens einen Qualitätsmerkmals (Q11-Q16; Q21-Q24; Q31, Q32) auswählen kann.

**13.** Client-Dienst-Managementmodul für eine Client-Gruppe (GI;.G2; G3) mit einem ersten und mindestens einem zweiten Client (C1-C3; C4, C5; CA1-CA3)_{,} für die mindestens ein Dienst von einem ersten Server (P1-P3; A1, A2) oder mindestens einem zweiten Server (P1-P3; A1, A2) erbracht werden kann,
- mit Empfangsmitteln (SED) zum Empfangen einer von dem ersten oder dem mindestens eine zweiten Client (C1-C3; C4, C5; CA1-CA3) gesendeten Anforderung für den mindestens einen dienst,
- mit Auswahlmitteln (SEL) zum Auswählen des ersten oder des mindestens einen zweiten Servers (P1-P3; A1, A2) anhand mindestens eines in einer der Client-Gruppe (G1; G2; G3) zugeordneten clientseitigen Datenbasis (DB1; DB2; DB3) bezüglich des ersten Servers (P1-P3; A1, A2) bzw. des mindestens einen zweiten Servers (P1-P3; A1, A2) eingetragenen Qualitätsmerkmals (Q11-Q16; Q21-Q24; Q31, Q32), und
- mit Sendemitteln (SED) zum Senden der Anforderung für den mindestens einen Dienst an den jeweils ausgewählten ersten oder mindestens einen zweiten Server (P1-P3; A1, A2).

**14.** Client-Dienst-Managementmodul nach Anspruch 13, **dadurch gekennzeichnet, dass** es Verwaltungsmittel (DBM) zum Eintragen des in der clientseitigen Datenbasis (DB1; DB2; DB3) bezüglich des ersten Servers (P1-P3; A1, A2) bzw. des mindestens einen zweiten Servers (P1-P3; A1, A2) Qualitätsmerkmals (Q11-Q16; Q21-Q24; Q31, Q32) aufweist.

**15.** Datenbasis (DB1; DB2; DB3) für eine Client-Gruppe (G1; G2; G3) mit einem ersten und mindestens einem zweiten Client (C1-C3; C4, C5; CA1-CA3), für die mindestens ein Dienst von einem ersten Server (P1-P3; A1, A2) oder mindestens einem zweiten Server (P1-P3; A1, A2) erbracht werden kann,
- in die mindestens ein Qualitätsmerkmal (Q11-Q16; Q21-Q24; Q31, Q32) bezüglich des ersten Servers (P1-P3; A1, A2) bzw. des mindestens einen zweiten Servers (P1-P3; A1, A2) eintragbar ist, wobei das mindestens eine Qualitätsmerkmal (Q11-Q16; Q21-Q24; Q31, Q32) beim Erbringen des mindestens einen Dienstes durch den ersten Server (P1-P3; A1, A2) oder den mindestens einen zweiten Server (P1-P3; A1, A2) für einen der Clients (C1-C3; C4, C5; CA1-CA3) der Client-Gruppe (G1; G2; G3) ermittelbar ist und mindestens eine Qualität des Erbringens des Dienstes durch den ersten Server (P1-P3; A1, A2) bzw. den mindestens einen zweiten Server (P1-P3; A1, A2) kennzeichnet,
- und aus der das mindestens eine Qualitätsmerkmal (Q11-Q16; Q21-Q24; Q31, Q32) bei einer Anforderung des mindestens einen Dienstes für einen der Ctients (C1-C3; C4, C5; CA1-CA3) der Client-Gruppe (G1; G2; G3) auslesbar ist, so dass der erste oder der mindestens eine zweite Server (P1-P3; A1_{,} A2) anhand des mindestens einen Qualitätsmerkmals (Q11-Q16; Q21-Q24; Q31, Q32) ausgewählt werden kann.

**16.** Client nach Anspruch 11 oder Client-Dienst-Managementmodul (DM1; DM2; DM3) nach Anspruch 13, **dadurch gekennzeichnet, dass** sie jeweils Programmcode enthalten, der von einem Steuermittel eines Client-Rechners ausgeführt werden kann.

**17.** Speichermittel, insbesondere Diskette oder CD-ROM, Digital Versatile Disc, Festplattenlaufwerk oder dergleichen, mit einem darauf gespeicherten Client nach Anspruch 16 und/oder einem darauf gespeicherten Client-Dienst-Managementmodul (DM1; DM2; DM3) nach Anspruch 16 und/oder einer darauf gespeicherten clientseitigen Datenbasis (DB1; DB2; DB3) nach Anspruch 15.

**18.** Client-Gruppe (G1; G2; G3) eines verteilten Systems mit einem ersten und mindestens einem zweiten Client (C1-C3; C4, C5; CA1-CA3), für die mindestens ein Dienst jeweils von einem ersten Server (P1-P3; A1, A2) oder mindestens einem zweiten Server (P1-P3; A1, A2) erbracht werden kann, und mit einer clientseitigen Datenbasis (DB1; DB2; DB3),
- wobei der erste und mindestens eine zweite Client (C1-C3; C4, C5; CA1-CA3), und die clientseitige Datenbasis (DB1; DB2; DB3) der Client-Gruppe (G1; G2; G3) nahe beieinander angeordnet sind,
- wobei die Clients (C1-C3; C4, C5; CA1-CA3) der Client-Gruppe (G1; G2; G3) und/oder ein Client-Dienst-Managementmodul (DM1; DM2; DM3) der Client-Gruppe (G1; G2; G3) beim Erbringen des mindestens einen Dienstes durch den ersten Server (P1-P3; A1, A2) oder den mindestens einen zweiten Server (P1-P3; A1, A2) für einen der Clients (C1-C3/ C4, C5; CA1-CA3) mindestens ein Qualitätsmerkmal (Q11-Q16; Q21-Q24; Q31, Q32) ermitteln, das mindestens eine Qualität des Erbringens des Dienstes durch den ersten Server (P1-P3; A1, A2) bzw. den mindestens einen zweiten Server (P1-P3; A1, A2) kennzeichnet,
- wobei das mindestens eine Qualitätsmerkmal (Q11-Q16; Q21-Q24; Q31, Q32) in eine der Client-Gruppe (G1; G2; G3) zugeordnete clientseitige Datenbasis (DB1; DB2; DB3) bezüglich des ersten Servers (P1-P3; A1, A2) bzw. des mindestens einen zweiten Servers (P1-P3; A1, A2) eingetragen wird, und
- wobei bei einer Anforderung des mindestens einen Dienstes für einen der Clients (C1-C3; C4, C5; CA1-CA3) der Client-Gruppe (G1; G2; G3) der erste oder der mindestens eine zweite Server (P1-P3; A1, A2) anhand des in der clientseitigen Datenbasis (DB1; DB2; DB3) eingetragenen mindestens einen Qualitätsmerkmals (Q11-Q16; Q21-Q24; Q31, Q32) ausgewählt wird.

**19.** Speichermittel, insbesondere Diskette oder CD-ROM, Digital Versatile Disc, Festplattenlaufwerk oder dergleichen, mit einem darauf gespeicherten Client (C1-C3; C4, C5; CA1-CA3) eines verteilten Systems, für den ein Dienst von einem ersten Server (P1-P3; A1, A2) oder mindestens einem zweiten Server (P1-P3; A1, A2) erbracht werden kann und der zum Zusammenwirken mit mindestens einem zweiten Client (C1-C3; C4, C5; CA1-CA3) der Client-Gruppe (G1; G2; G3) ausgestaltet ist, wobei der Client Programmcode enthält, der von einem Steuermittel eines Client-Rechners ausgeführt werden kann,
- wobei der Client (C1-C3; C4, C5; CA1-CA3) Analysemittel (ANA) enthält, die derart ausgestaltet sind, dass der Client (C1-C3; C4, C5; CA1-CA3) beim Erbringen des mindestens einen Dienstes durch den ersten Server (P1-P3; A1, A2) oder den mindestens einen zweiten Server (P1-P3; A1, A2) mindestens ein Qualitätsmerkmal (Q11-Q16; Q21-Q24; Q31, Q32) ermitteln kann, das mindestens eine Qualität des Erbringens des Dienstes durch den ersten Server (P1-P3; A1, A2) bzw. den mindestens einen zweiten Server (P1-P3; A1, A2) kennzeichnet, und
- wobei der Client (C1-C3; C4, C5; CA1-CA3) Sende- oder Schreibmittel (DBRW) enthält, die derart ausgestaltet sind, dass der Client (C1-C3; C4, C5; CA1-CA3) das mindestens eine Qualitätsmerkmal (Q11-Q16; Q21-Q24; Q31, Q32) bezüglich des ersten Servers (P1-P3; A1, A2) bzw. des mindestens einen zweiten Servers (P1-P3; A1, A2) an eine der Client-Gruppe (G1; G2; G3) zugeordnete clientseitige Datenbasis (DB1; DB2; DB3) übermitteln bzw. in diese eintragen kann, so dass bei einer Anforderung des mindestens einen Dienstes für den Client (C1-C3; C4, C5; CA1-CA3) oder den mindestens einen zweiten Client (C1-C3; C4, C5; CA1-CA3) der erste oder der mindestens eine zweite Server (P1-P3; A1, A2) anhand des in der clientseitigen Datenbasis (DB1; DB2; DB3) eingetragenen mindestens einen Qualitätsmerkmals (Q11-Q16; Q21-Q24; Q31, Q32) auswählbar ist.

**20.** Speichermittel, insbesondere Diskette oder CD-ROM, Digital Versatile Disc, Festplattenlaufwerk oder dergleichen, mit einem darauf gespeicherten Client-Dienst-Managementmodul (DM1; DM2; DM3) für eine Client-Gruppe (G1; G2; G3) mit einem ersten und mindestens einem zweiten Client (C1-C3; C4, C5; CA1-CA3), für die mindestens ein Dienst von einem ersten Server (P1-P3; A1 A2) oder mindestens einem zweiten Server (P1-P3; A1, A2) erbracht werden kann, wobei das Client-Dienst-Managementmodul (DM1; DM2; DM3) Programmcode enthält, der von einem Steuermittel eines Client-Rechners ausgeführt werden kann und wobei das Client-Dienst-Managementmodul (DM1; DM2; DM3) ferner enthält:
- Empfangsmittel (SED) zum Empfangen einer von dem ersten oder dem mindestens eine zweiten Client (C1-C3; C4, C5; CA1-CA3) gesendeten Anforde rung für den mindestens einen Dienst,
- Auswahlmittel (SEL) zum Auswählen des ersten oder des mindestens einen zweiten Servers (P1-P3; A1, A2) anhand mindestens eines in einer der Client-Gruppe (G1; G2; G3) zugeordneten clientseitigen Datenbasis (DB1; DB2; DB3) bezüglich des ersten Servers (P1-P3; A1, A2) bzw. des mindestens einen zweiten Servers (P1-P3; A1, A2) eingetragenen Qualitätsmerkmals (Q11-Q16; Q21-Q24; Q31, Q32), und
- Sendemittel (SED) zum Senden der Anforderung für den mindestens einen Dienst an den jeweils ausgewählten ersten oder mindestens einen zweiten Server (P1-P3; A1, A2).
